# EUROPÄISCHE PATENTSCHRIFT

(11) **EP 3 183 171 B1**
(45) Veröffentlichungstag und Bekanntmachung des Hinweises auf die Patenterteilung: **29.08.2018**
(21) Anmeldenummer: 15756381.8
(22) Anmeldetag: 18.08.2015
(51) Int. Cl.: B64D 11/06, B64D 25/04

(54) **SITZSYSTEM FÜR HUBSCHRAUBER MIT EINSTELLBARER ENERGIEABSORPTIONSANORDNUNG**
HELICOPTER SEAT SYSTEM HAVING ADJUSTABLE ENERGY ABSORPTION ARRANGEMENT
SYSTÈME DE SIÈGE POUR HÉLICOPTÈRE ÉQUIPÉ D'UN ENSEMBLE D'ABSORPTION D'ÉNERGIE RÉGLABLE

(30) Priorität: 21.08.2014 DE 102014111994
(43) Veröffentlichungstag der Anmeldung: 28.06.2017
(73) Patentinhaber: Autoflug GmbH, 25462 Rellingen (DE)
(72) Erfinder: MEINS, Oliver, 24558 Henstadt-Ulzburg (DE)
(74) Vertreter: Feucker, Max Martin
(86) Internationale Anmeldenummer: PCT/EP2015/068950
(87) Internationale Veröffentlichungsnummer: WO 2016/026860

(56) Entgegenhaltungen:
- EP-A2- 1 197 429
- GB-A- 998 536
- US-A- 4 223 763
- US-A- 6 152 401
- US-A1- 2008 015 753

## Beschreibung

Die vorliegende Erfindung betrifft ein Sitzsystem für Hubschrauber mit einem an dem Hubschrauber befestigbaren Rahmen, einer Energieabsorptionsanordnung, die eine einen Spalt mit einer ersten Spaltbreite ausbildende, erste Verformungseinrichtung und ein in dem Spalt angeordnetes, erstes Rohr umfasst, dessen Durchmesser außerhalb des Spaltes größer ist als die erste Spaltbreite, und mit einer an dem Rahmen verschiebbar gelagerten Sitzeinheit, die so mit einem Element der Energieabsorptionsanordnung fest verbundenen ist, dass im Falle einer durch einen Absturz verursachten Beschleunigung durch die Energieabsorptionseinrichtung eine Verschiebung der Sitzeinheit entlang des Rahmens gedämpft wird, indem die erste Verformungseinrichtung und das erste Rohr relativ zueinander bewegt werden, wodurch das relativ zu dem Spalt bewegte erste Rohr verformt wird, wobei die Energieabsorptionsanordnung ein in einem eine zweite Spaltbreite aufweisenden Spalt der ersten Verformungseinrichtung oder in einem eine zweite Spaltbreite aufweisenden Spalt einer zweiten Verformungseinrichtung angeordnetes, zweites Rohr umfasst, dessen Durchmesser außerhalb des Spaltes größer ist als die zweite Spaltbreite.

Ein Sitzsystem mit den vorgenannten Merkmalen ist beispielsweise aus EP 1 197 429 B1 bekannt. Durch das Verhältnis von Rohrdurchmesser zur Spaltbreite, durch die Materialstärke der Rohrwand und/oder durch das Material des Rohres kann die Energieabsorptionsanordnung für eine gewisse Gewichtsspanne der Belegmasse eines Insassen ausgelegt werden. Übersteigt die Belegmasse eines Insassen diese Gewichtsspanne besteht jedoch die Gefahr, dass bei einem absturzbedingten Aufschlag des Hubschraubers der Verfahrweg der Energieabsorptionsanordnung und damit der Sitzeinheit vor Beendigung der Energieabsorption erreicht ist, so dass wiederum eine ungewollte große Beschleunigung auf den Insassen wirkt. Es ist daher erforderlich die Energieabsorptionsanordnung bei Insassen mit relativ hoher Belegmasse anzupassen. EP 1 197 429 B1 schlägt hierzu vor, ein Rohr zu verwenden, welches außen einen kreisförmigen Querschnitt und innen einen nicht kreisförmigen Querschnitt aufweist und dieses Rohr um seine Längsachse in unterschiedliche Positionen in Abhängigkeit vom Gewicht des Insassens zu drehen. Alternativ wird unter anderem vorgeschlagen, die Spaltbreite der Verformungseinrichtung zu variieren.

Nachteilig an einer solchen Lösung zur Einstellung der Energieabsorptionsanordnung ist, dass nicht immer gewährleistet werden kann, dass die aktuell eingestellte Einstellung der Energieabsorptionsanordnung ablesbar ist. Aufgrund der stufenlos einstellbaren Energieabsorptionsanordnung ist die Bedienung komplex, was zu falschen Einstellungen führen kann.

Ein weiteres Sitzsystem ist aus GB 998 536 A bekannt.

Aufgabe der vorliegenden Erfindung ist es daher, die mit Bezug zum Stand der Technik geschilderten Probleme zumindest teilweise zu lösen und insbesondere ein Sitzsystem anzugeben, bei dem die Energieabsorptionsanordnung auf alternative Weise in ihrer Einstellung geändert werden kann, wobei dies insbesondere auf einfache Weise erfolgen soll.

Gelöst werden diese Aufgaben mit einem Sitzsystem mit den Merkmalen des unabhängigen Anspruchs. Vorteilhafte Weiterbildungen des Sitzsystems sind in den abhängigen Ansprüchen und in der Beschreibung angegeben. Gelöst werden diese Aufgaben insbesondere durch ein Sitzsystem mit den eingangs genannten Merkmalen, wobei ferner eine Kopplungseinheit vorgesehen ist, die das zweite Rohr oder die zweite Verformungseinrichtung bei Bedarf mit der Sitzeinheit insbesondere lösbar verbindet, so dass im gekoppelten Zustand im Beschleunigungsfall das zweite Rohr bei einer Relativbewegung zu der entsprechenden Verformungseinrichtung verformt wird, wodurch die Dämpfung der Verschiebung der Sitzeinheit erhöht ist.
Der Spalt der Verformungseinrichtung(en) wird insbesondere durch zwei mit einem Abstand zueinander, parallel versetzten Rollen ausgebildet. Die erste Spaltbreite und die zweite Spaltbreite können gleich groß sein, können aber auch eine unterschiedliche Abmessung aufweisen. Der Spalt kann auch durch andere geeignete Elemente ausgebildet werden, wobei der Spalt nicht durch parallele Kanten begrenzt sein muss, sondern auch anders geformte Kanten aufweisen kann. Es ist zwar bevorzugt, dass das erste Rohr und das zweite Rohr einen kreisrunden Querschnitt aufweisen, es ist aber auch möglich, dass das erste Rohr und das zweite Rohr eine davon abweichende Querschnittsform aufweisen, wobei in diesem Fall der Durchmesser der Rohre in Richtung der entsprechenden Spaltbreiten gemessen würde. Dadurch, das der Durchmesser der Rohre außerhalb der Spalte größer ist als die Spaltbreite der entsprechenden Spalte, wird bei einem absturzbedingten Aufschlag des Hubschraubers das relativ zu dem Spalt bewegte Rohr in seinem Querschnitt verformt, wobei die Energieabsorption durch die dabei geleistete Verformungsarbeit erfolgt.

Die Sitzeinheit ist verschiebbar an dem Rahmen gelagert und ist entweder mit dem ersten Rohr oder der ersten Verformungseinrichtung fest verbunden, so dass das mittelbar oder unmittelbar mit der Sitzeinheit verbundene Element der Energieabsorptionsanordnung bei einem absturzbedingten Aufschlag des Hubschraubers relativ zu dem anderen, ortsfest festgelegten Element der Energieabsorptionsanordnung beweglich ist.

Die Sitzeinheit umfasst insbesondere eine Sitztasche, die an mindestens einer Verbindungsschiene gehalten ist. Jede Verbindungsschiene wiederum ist verschiebbar an dem Rahmen gelagert und mit einer Energieabsorptionsanordnung verbunden.

Die Erfindung sieht nun vor, dass die Energieabsorptionsanordnung ein zweites Rohr umfasst, welches entweder neben dem ersten Rohr in dem Spalt der ersten Verformungseinrichtung oder in einem Spalt einer zweiten Verformungseinrichtung angeordnet ist. Es ist ferner eine Kopplungseinheit vorgesehen, die die Sitzeinheit insbesondere mittelbar mit dem zweiten Rohr koppelt, für den Fall, dass beim absturzbedingten Aufschlag des Hubschraubers das Rohr relativ zu der entsprechenden ortsfesten Verformungseinrichtung bewegbar ist, oder die die Sitzeinheit mit der zweiten Verformungseinrichtung koppelt, für den Fall, dass die zweite Verformungseinrichtung relativ zu dem ortsfesten zweiten Rohr beim absturzbedingten Aufschlag des Hubschraubers bewegbar ist.

Das zweite Rohr wird in Abhängigkeit von der Belegmasse des Insassen mit der Sitzeinheit verbunden. Somit kann das Sitzsystem für eine große Spanne der Belegmasse verwendet werden. So sind beispielsweise die erste Verformungseinrichtung und das erste Rohr so ausgelegt, dass bei einer Belegmasse zwischen 73 kg und 130 kg ein ausreichender Verfahrweg zum Abbau der Energie vorhanden ist, ohne dass das zweite Rohr an der Energieabsorption beteiligt ist. Das zweite Rohr und gegebenenfalls die zweite Verformungseinrichtung sind in Kombination mit dem ersten Rohr und der ersten Verformungseinrichtung so ausgelegt, dass beispielsweise bei einer Belegmasse von 110 kg bis 150 kg das Verfahrwegende nicht erreicht wird, bevor nicht genügend Energie absorbiert wurde, wobei an der Energieabsorption sowohl das erste Rohr als auch das zweite Rohr beteiligt sind.

Es kann vorgesehen sein, dass die Sitzeinheit mittelbar oder unmittelbar mit dem ersten Rohr verbunden und mit dem zweiten Rohr insbesondere lösbar verbindbar ist, so dass zumindest das erste Rohr und gegebenenfalls das zweite Rohr im Beschleunigungsfall relativ zu der ortsfesten ersten Verformungseinrichtung und der ortsfesten zweiten Verformungseinrichtung bewegbar ist.

Zudem kann vorgesehen sein, dass die Energieabsorptionsanordnung in dem Rahmen angeordnet ist und eine mittelbare Verbindung der Energieabsorptionsanordnung mit der Sitzeinheit über einen zumindest teilweise in dem Rahmen angeordneten und in dem Rahmen im absturzbedingten Beschleunigungsfall verschiebbaren Schlitten erfolgt. Somit ist die Energieabsorptionsanordnung durch den Rahmen von äußeren Einflüssen geschützt, wobei der Rahmen selbst zudem eine Führung für die beim absturzbedingten Aufschlag beweglichen Elemente der Energieabsorptionsanordnung bereitstellt.

In diesem Zusammenhang kann vorgesehen sein, dass der Schlitten über Räder an der Rahmeninnenseite abgestützt ist. Somit wird ein Verkanten der beweglichen Teile der Energieabsorptionsanordnung in dem Rahmen verhindert.

Für eine einfache und kostengünstige Realisierung der Erfindung kann vorgesehen sein, dass die Kopplungseinheit einen Stift umfasst, mit dem die Sitzeinheit über den Schlitten manuell mit dem zweiten Rohr gekoppelt wird. Bei einer solchen Ausgestaltung kann vor dem Start des Fluges die Einstellung der Energieabsorptionsanordnung geprüft und gegebenenfalls geändert werden, wobei der gekoppelte oder ungekoppelte Stift die Einstellung der Energieabsorptionsanordnung anzeigt.

Alternativ kann vorgesehen sein, dass die Kopplungseinheit einen Gewichtssensor zur Bestimmung der Belegmasse des auf der Sitzeinheit sitzenden Insassen und eine Betätigungseinheit umfasst, die die Sitzeinheit in Abhängigkeit von der erfassten Belegmasse mittels des Schlittens mit dem zweiten Rohr koppelt.

Die Verformungseinrichtungen sind insbesondere jeweils durch ein den Spalt zwischen sich ausbildendes Rollenpaar gebildet.

In diesem Zusammenhang ist in Kombination mit der Anordnung der Energieabsorptionsanordnung in dem Rahmen vorgesehen, dass Rollen der Rollenpaare an einem Käfig ortsfest in dem Rahmen drehbar gelagert sind.

Im Folgenden wird anhand der Figuren das technische Umfeld sowie ein Ausführungsbeispiel des Sitzsystems beschrieben, wobei darauf hinzuweisen ist, dass das dargestellte Sitzsystem eine bevorzugte Ausführungsform der Erfindung darstellt, auf die die Erfindung nicht beschränkt ist. Es zeigen schematisch
- Fig. 1:: ein Sitzsystem,
- Fig. 2:: ein Rahmen des Sitzsystems mit einer Energieabsorptionsanordnung,
- Fig. 3 bis 5:: die Energieabsorptionsanordnung,
- Fig. 6:: die Energieabsorptionsanordnung im Beschleunigungsfall im nicht gekoppelten Zustand,
- Fig. 7:: die Energieabsorptionsanordnung im Beschleunigungsfall im gekoppelten Zustand,
- Fig. 8:: einen Querschnitt durch die Verformungseinrichtungen und
- Fig. 9:: einen Querschnitt durch den Rahmen.

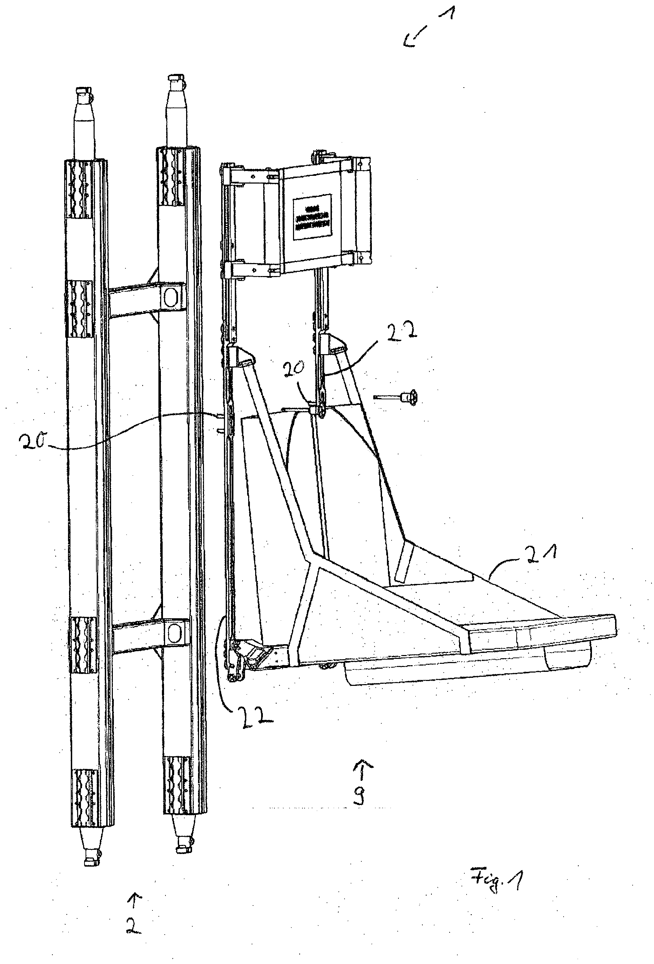

Fig. 1 zeigt ein Sitzsystem 1 für einen Hubschrauber mit einer Sitzeinheit 9, die entlang eines Rahmens 2 verschiebbar gelagert ist. Die Sitzeinheit 9 umfasst eine Sitztasche 21, die an Verbindungsschienen 22 befestigt ist. Die Verbindungsschienen 22 sind an dem Rahmen 2 verschiebbar gelagert. Über Verbindungselemente 20 sind die Verbindungsschienen 22 mit auf beiden Seiten mit in dem Rahmen 2 ausgebildeten Energieabsorptionsanordnungen 3 verbunden.

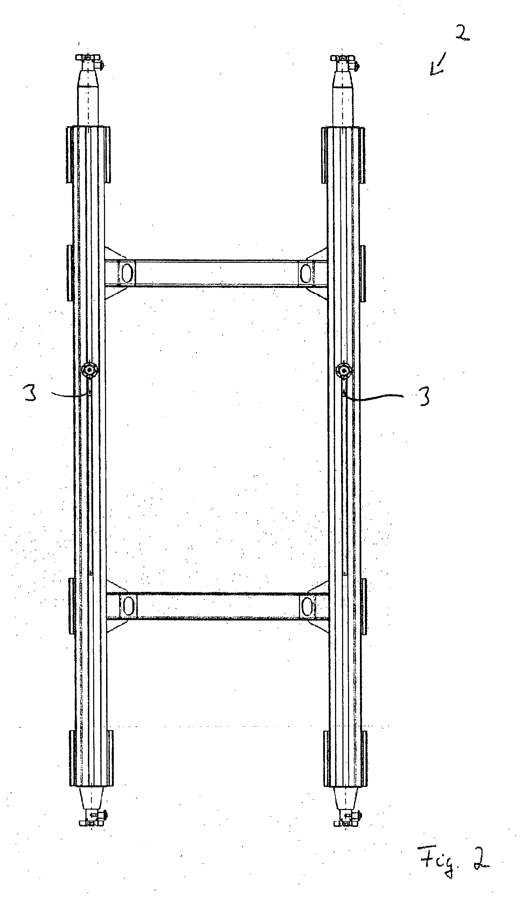

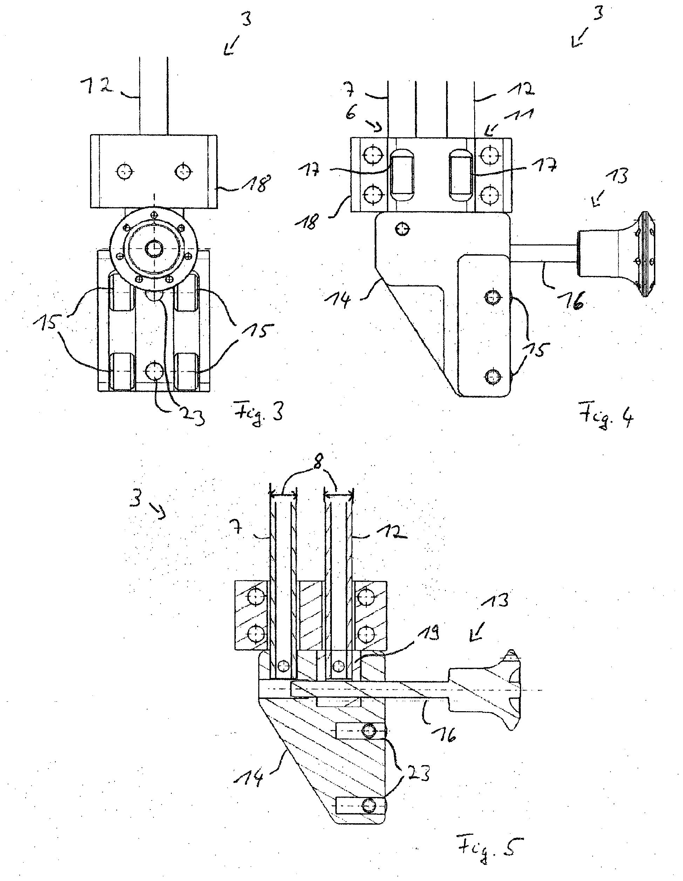

In der Darstellung der Fig. 2 ist der Rahmen 2 mit einem linken Rahmenteil und einem rechten Rahmenteil dargestellt. Sowohl in dem linken Rahmenteil als auch in dem rechten Rahmenteil ist jeweils eine Energieabsorptionsanordnung 3 angeordnet. Eine Energieabsorptionsanordnung 3 wird mit Bezug zu den Figuren 3 bis 9 näher beschrieben.

Die Energieabsorptionsanordnung 3 umfasst einen ortsfest in dem Rahmen 2 festgelegten Käfig 18, an dem später beschriebene Verformungseinrichtungen 6, 11 ausgebildet sind. Die Energieabsorptionsanordnung 3 umfasst ferner Rohre 7, 12 die durch die Verformungseinrichtungen 6, 11 geführt sind und mit einem Schlitten 14 verbunden beziehungsweise verbindbar sind. Über den Schlitten 14 ist die Sitzeinheit 9 mittels der Verbindungselemente 20 mit der Energieabsorptionsanordnung 3 verbunden. Zumindest das Rohr 7 und der Schlitten 14 sind bei einer absturzbedingten Beschleunigung eines auf der Sitzeinheit 9 befindlichen Insassens entlang des Rahmens 2 in dem Rahmen 2 relativ zu dem Käfig 18 verschiebbar.

An dem in dem Rahmen 2 ortsfest festgelegten Käfig 18 sind Rollen 17 paarweise einander gegenüber drehbar gelagert, wobei zwischen den Rollen 17 jeweils ein Spalt 4 ausgebildet ist. Das als erste Verformungseinrichtung 6 aufzufassende Rollenpaar bildet einen Spalt 4 mit einer ersten Spaltbreite 5 zwischen sich aus. Das als zweite Verformungseinrichtung 11 aufzufassende Rollenpaar bildet einen Spalt 4 mit einer zweiten Spaltbreite 10 zwischen sich aus. In dem Spalt 4 der ersten Verformungseinrichtung 6 ist ein erstes Rohr 7 und in dem Spalt 4 der zweiten Verformungseinrichtung 11 ist ein zweites Rohr 12 angeordnet. In dem Bereich der durch die Rollen 17 ausgebildeten Spalte 4 sind das erste Rohr 7 und das zweite Rohr 12 verformt. Außerhalb der Spalte 4 weisen das erste Rohr 7 und das zweite Rohr 12 jeweils einen kreisrunden Querschnitt mit jeweils einem Durchmesser 8 auf, der größer ist als die erste Spaltbreite 5 beziehungsweise als die zweite Spaltbreite 10.

An seinem unteren Ende ist das erste Rohr 7 mit einem Schlitten 14 fest verbunden. Das zweite Rohr 12 ist an seinem unteren Ende mit einer Hülse 19 fest verbunden, die mittels einer einen Stift 16 umfassenden Kopplungseinheit 13 mit dem Schlitten 14 bei Bedarf verbindbar ist. Der Schlitten 14 stützt sich mittels Räder 15 am Inneren des Rahmens 2 ab. Die Sitzeinheit 9 ist über die in an dem Schlitten 14 ausgebildeten Bohrungen 23 eingreifenden Verbindungselemente 20 mit dem Schlitten 14 verbunden.

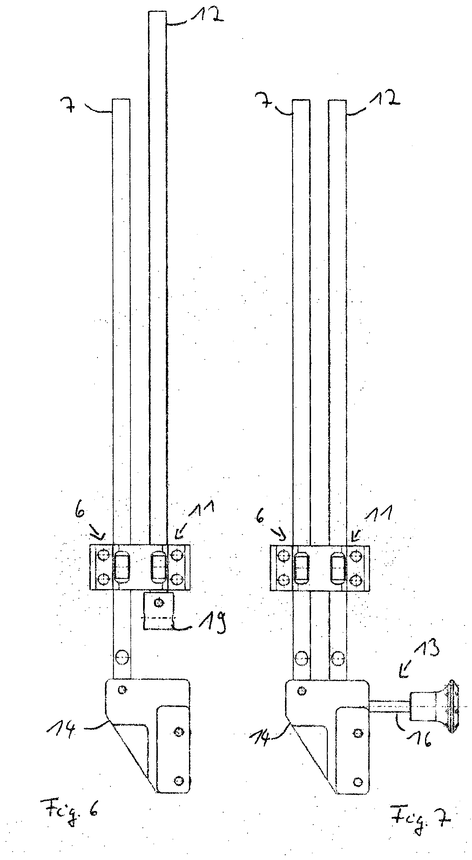

Im normalen Betrieb eines Hubschraubers wird die Sitzeinheit 9 nicht entlang des Rahmens 2 bewegt, da die von dem Insassen auf die Rohre 7, 12 wirkende Schwerkraft nicht ausreicht, um die Rohre 7, 12 zu verformen und relativ zu den Verformungseinrichtungen 6, 11 zu bewegen. Im Falle eines Absturzes des Hubschraubers wird jedoch beim Aufschlag des Hubschraubers der auf der Sitzeinheit 9 sitzende Insasse so stark beschleunigt, dass zumindest das erste Rohr 7 durch die erste Verformungseinheit 6 gezogen wird, wodurch sich die auf den Insassen wirkenden Kräfte aufgrund der sich dann bewegenden Sitzeinheit 9 verringern. In Fig. 6 ist eine Ansicht der Energieabsorptionsanordnung 3 gezeigt, bei der das zweite Rohr 12 nicht mit dem Schlitten 14 verbunden ist. Bei einer solchen Einstellung wird bei einem absturzbedingten Aufschlag lediglich das erste Rohr 7 durch die erste Verformungseinheit 6 gezogen. Während für einen relativ leichten Insassen eine Verformung des ersten Rohres 7 zur Reduzierung der auf ihn wirkenden Kräfte ausreicht, könnte es bei einem relativ schweren Insassen passieren, dass der durch das erste Rohr 7 und die Verformungseinheit 6 vorgegebene Verfahrweg nicht ausreicht und der Schlitten 14 am Ende des Verfahrweges an einen Anschlag zur Anlage kommt, wodurch wiederum hohe Kräfte auf den Insassen wirken.

Die dargestellte Ausführungsform der Erfindung sieht daher vor, dass bei einem relativ hohen Gewicht des Insassen das zweite Rohr 12 mit dem Schlitten. 14 über die als Stift 16 ausgebildete Kopplungseinheit 13 verbunden wird, so dass im Falle eines absturzbedingten Aufschlages das erste Rohr 7 durch die erste Verformungseinheit 6 und gleichzeitig das zweite Rohr 12 durch die zweite Verformungseinheit 11 gezogen wird. Aufgrund der zusätzlichen durch die Parameter des zweiten Rohrs 12 und der zweiten Verformungseinheit 11 einstellbaren Energieabsorption wird somit verhindert, dass der Schlitten 14 beziehungsweise die Sitzeinheit 9 an einen Anschlag zur Anlage kommt, wobei gleichzeitig gewährleistet wird, dass die auf den relativ schweren Insassen wirkende Kraft verringert wird.

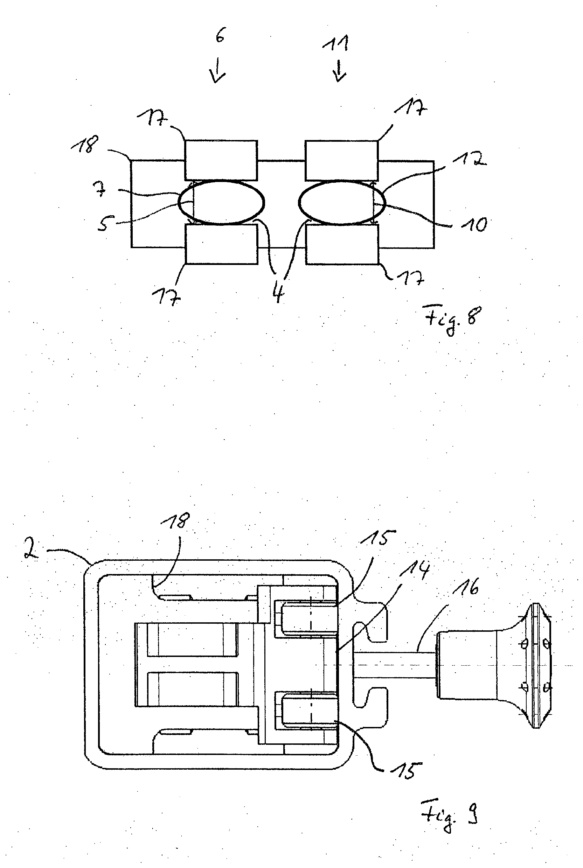

In Figur 9 ist ein Querschnitt durch einen als Profilrahmen ausgebildeten Rahmen 2 gezeigt, in dem der die Rollen 17 der Verformungseinrichtungen 6, 11 lagernde Käfig 18 ortsfest festgelegt ist. Ferner ist der Schlitten 14 zu erkennen, der sich mit Rädern 15 gegen das Innere des Rahmens 2 abstützt. Durch Einstecken des Stiftes 16 kann das zweite Rohr 12 über eine Hülse 19 mit dem Schlitten 14 verbunden werden.

### Bezugszeichenliste

- 1: Sitzsystem
- 2: Rahmen
- 3: Energieabsorptionsanordnung
- 4: Spalt
- 5: erste Spaltbreite
- 6: erste Verformungseinrichtung
- 7: erstes Rohr
- 8: Durchmesser
- 9: Sitzeinheit
- 10: zweite Spaltbreite
- 11: zweite Verformungseinrichtung
- 12: zweites Rohr
- 13: Kopplungseinheit
- 14: Schlitten
- 15: Rad
- 16: Stift
- 17: Rolle
- 18: Käfig
- 19: Hülse
- 20: Verbindungselement
- 21: Sitztasche
- 22: Verbindungsschiene
- 23: Bohrung

## Patentansprüche

1. Sitzsystem (1) für Hubschrauber mit einem an dem Hubschrauber befestigbaren Rahmen (2), einer Energieabsorptionsanordnung (3), die eine einen Spalt (4) mit einer ersten Spaltbreite (5) ausbildende, erste Verformungseinrichtung (6) und ein in dem Spalt (4) angeordnetes, erstes Rohr (7) umfasst, dessen Durchmesser (8) außerhalb des Spaltes (4) größer ist als die erste Spaltbreite (5), und mit einer an dem Rahmen (2) verschiebbar gelagerten Sitzeinheit (9), die so mit einem Element der Energieabsorptionsanordnung (3) fest verbundenen ist, dass im Falle einer durch einen Absturz verursachten Beschleunigung durch die Energieabsorptionsanordnung (3) eine Verschiebung der Sitzeinheit (9) entlang des Rahmens (2) gedämpft wird, indem die erste Verformungseinrichtung (6) und das erste Rohr (7) relativ zueinander bewegt werden, wodurch das relativ zu dem Spalt (4) bewegte erste Rohr (7) verformt wird, wobei die Energieabsorptionsanordnung (3) ein in einem eine zweite Spaltbreite (10) aufweisenden Spalt (4) der ersten Verformungseinrichtung (6) oder in einem eine zweite Spaltbreite (10) aufweisenden Spalt (4) einer zweiten Verformungseinrichtung (11) angeordnetes, zweites Rohr (12) umfasst, dessen Durchmesser (8) außerhalb des Spaltes (4) größer ist als die zweite Spaltbreite (10), **dadurch gekennzeichnet, dass** ferner eine Kopplungseinheit (13) vorgesehen ist, mit der das zweite Rohr (12) oder die zweite Verformungseinrichtung (11) in Abhängigkeit von der Belegmasse mit der Sitzeinheit (9) lösbar koppelbar ist, so dass im gekoppelten Zustand im Beschleunigungsfall das zweite Rohr (12) bei einer Relativbewegung zu der entsprechenden Verformungseinrichtung (6, 11) verformt wird, wodurch die Dämpfung der Verschiebung der Sitzeinheit (9) erhöht ist.

2. Sitzsystem (1) nach Anspruch 1, wobei die Sitzeinheit (9) mit dem ersten Rohr (7) verbunden und mit dem zweiten Rohr (12) insbesondere lösbar verbindbar ist, so dass zumindest das erste Rohr (7) im absturzbedingten Beschleunigungsfall relativ zu der ortsfesten ersten Verformungseinrichtung (6) bewegbar ist.

3. Sitzsystem (1) nach Anspruch 1 oder 2, wobei die Energieabsorptionsanordnung (3) in dem Rahmen (2) angeordnet ist und eine mittelbare Verbindung der Energieabsorptionsanordnung (3) mit der Sitzeinheit (9) über einen zumindest teilweise in dem Rahmen (2) angeordneten und in dem Rahmen (2) im absturzbedingten Beschleunigungsfall verschiebbaren Schlitten (14) erfolgt.

4. Sitzsystem (1) nach Anspruch 3, wobei sich der Schlitten (14) über Räder (15) an der Rahmeninnenseite abstützt.

5. Sitzsystem (1) nach einem der Ansprüche 3 oder 4, wobei die Kopplungseinheit (13) einen Stift (16) umfasst, mit dem die Sitzeinheit (9) über den Schlitten (14) manuell mit dem zweiten Rohr (12) gekoppelt wird.

6. Sitzsystem (1) nach einem der Ansprüche 3 oder 4, wobei die Kopplungseinheit (13) einen Gewichtssensor zur Bestimmung der Belegmasse des auf der Sitzeinheit (9) sitzenden Insassen und eine Betätigungseinheit umfasst, die die Sitzeinheit (9) in Abhängigkeit von der erfassten Belegmasse mittels des Schlittens (14) mit dem zweiten Rohr (12) koppelt.

7. Sitzsystem (1) nach einem der vorhergehenden Ansprüche, wobei die Verformungseinrichtungen (6, 11) jeweils durch ein den Spalt (4) zwischen sich ausbildendes Rollenpaar gebildet sind.

8. Sitzsystem (1) nach einem der Ansprüche 3 bis 6 und 7, wobei Rollen (17) der Rollenpaare an einem Käfig (18) ortsfest in dem Rahmen (2) drehbar gelagert sind.

## Claims

1. Seat system (1) for helicopters with a frame (2) attachable to the helicopter, an energy absorption device (3) which comprises a first deformation device (6) forming a gap (4) with a first gap width (5) and, arranged in the gap, (4) a first tube (7), the diameter (8) of which outside the gap (4) is greater than the first gap width (5), and, displaceably borne on the frame (2), a seat unit (9) which is firmly connected with an element of the energy absorption device (3) in such a way that in the event of acceleration caused by a crash a displacement of the seat unit (9) along the frame (2) is dampened by the energy absorption device (3) in that the first deformation device (6) and the first tube (7) are moved relative to each other, whereby the first tube is deformed, wherein the energy absorption device (3) comprises a second tube (12) which second tube (12) is arranged in a gap (4) with a second gap width (10) of the first deformation device (6) or in a gap (4) with a second gap width (10) of a second deformation device, the diameter (8) of the second tube (12) outside the gap (4) is greater than the second gap width (10) **characterised in that** a coupling unit (13) is also provided with which the second tube (12) or the second deformation device (11) can be detachably connected in dependence on the occupied mass to the seat unit (9) so that in the coupled state in the event of acceleration the second tube (12) is deformed during a relative movement towards the corresponding deformation device (6, 11), through which damping of the displacement of the seat unit (9) is increased.

2. Seat system (1) according to claim 1 wherein the seat unit (9) is connected to the first tube (7) and is, in particular, detachably connectable to the second tube (12) so that at least the first tube (7) is movable relative to the stationary first deformation device (6) in the event of crash-related acceleration.

3. Seat system (1) according to claim 1 or 2 wherein the energy absorption device (3) is arranged in the frame (2) and a direct connection of the energy absorption device (3) with the seat unit (9) is brought about via a sled (14) which is at least partially arranged in the frame (2) and is displaceable in the frame (2) in the event of crash-related acceleration.

4. Seat system (1) according to claim 3 wherein the sled (14) is supported on the inside of the frame by means of wheels (15).

5. Seat system (1) according to any one of claims 3 or 4 wherein the coupling unit (13) comprises a pin (16) with which the seat unit (9) is manually connected with the second tube (12) via the sled (14).

6. Seat system (1) according to any one of claims 3 or 4 wherein the coupling unit (13) comprises a weight sensor for determining the mass of the occupants sitting on the seat unit (9) and an operating unit, which connects the seat unit (9) with the second tube (12) by way of the sled (14) in dependence on the recorded occupying mass.

7. Seat system (1) according to any one of the preceding claims wherein the deformation units (6, 11) are each formed by a roller pair forming the gap (4) between them.

8. Seat system (1) according to any one of claims 3 to 6 and 7 wherein rollers (17) of the roller pair are borne in rotatable manner on a cage (18) which is fixed in place in the frame (2).

## Revendications

1. Système de sièges (1) pour hélicoptère, comportant un cadre (2) pouvant être fixé à l'hélicoptère, un dispositif d'absorption d'énergie (3) qui présente un premier dispositif de déformation (6) constituant un intervalle (4) ayant une première largeur d'intervalle (5) et comprend un premier tuyau (7) disposé dans l'intervalle (4) et dont le diamètre (8) à l'extérieur de l'intervalle (4) est supérieur à la première largeur d'intervalle (5) et qui est connecté fixement à une unité de sièges (9) s'appuyant de manière mobile au niveau du cadre (2) et qui est connectée fixement à un élément du dispositif d'absorption d'énergie (3) de manière à ce que, dans le cas d'une accélération due à une chute, un déplacement de l'unité de sièges (9) le long du cadre (2) soit amorti par le dispositif d'absorption d'énergie (3) du fait que le premier dispositif de déformation (6) et le premier tuyau (7) sont déplacés l'un par rapport à l'autre, ce qui déforme le premier tuyau (7) déplacé par rapport à l'intervalle (4), le dispositif d'absorption d'énergie (3) comprenant un second tuyau (12) disposé dans un intervalle (4) présentant une seconde largeur d'intervalle (10) du premier dispositif de déformation (6) ou dans un intervalle (4) présentant une seconde largeur d'intervalle (10) d'un second dispositif de déformation (11) dont le diamètre (8) à l'extérieur de l'intervalle (4) est supérieur à la seconde largeur d'intervalle (10), **caractérisé en ce qu'**il est prévu en outre une unité de couplage (13) à laquelle le second tuyau (12) ou le second dispositif de déformation (11) peut être couplé de manière dissociable en fonction de la masse d'occupation à l'unité de sièges (9), de sorte que, à l'état couplé, en cas d'accélération, le second tuyau (12) est déformé en cas de mouvement relatif par rapport au dispositif de déformation correspondant (6,11), ce qui augmente l'amortissement du déplacement de l'unité de sièges (9).

2. Système de sièges (1) selon la revendication 1, l'unité de sièges (9) étant connectée au premier tuyau (7) et au second tuyau (12), en particulier de manière dissociable, de sorte qu'au moins le premier tuyau (7), en cas d'accélération due à une chute, es disposé t mobile par rapport au premier dispositif de déformation fixe (6).

3. Système de sièges (1) selon la revendication 1 ou 2, dans lequel le dispositif d'absorption d'énergie (3) est disposé dans le cadre (2) et une connexion directe du dispositif d'absorption d'énergie (3) à l'unité de sièges (9) est assurée par au moins un chariot (14) disposé du moins partiellement dans le cadre (2) et déplaçable dans le cadre (2) en cas d'accélération due à une chute.

4. Système de sièges (1) selon la revendication 3, dans lequel le chariot (14) s'appuie sur des roues (15) au niveau de la face intérieure du cadre.

5. Système de sièges (1) selon une des revendications 3 ou 4, dans lequel l'unité de couplage (13) comprend une tige (16) grâce à laquelle l'unité de sièges (9) est couplée manuellement par l'intermédiaire du chariot (14) au second tuyau (12).

6. Système de sièges (1) selon une des revendications 3 ou 4, dans lequel l'unité de couplage (13) comprend un capteur de poids pour déterminer la masse d'occupation du passager assis sur l'unité de sièges (9) et une unité d'actionnement qui couple l'unité de sièges (9) en fonction de la masse d'occupation déterminée au moyen du chariot (14) au second tuyau (12).

7. Système de sièges (1) selon une des revendications précédentes, dans lequel les dispositifs de déformation (6,11) sont respectivement constitués par un intervalle (4) entre une paire de roulettes se formant.

8. Système de sièges (1) selon une des revendications 3 à 6 et 7, dans lequel les roulettes (17) des paires de roulettes s'appuient en rotation fixement dans le cadre (2) au niveau d'une cage (18).
